# EUROPEAN PATENT SPECIFICATION

(11) **EP 4 106 491 B1**
(45) Date of publication and mention of the grant of the patent: **28.10.2026**
(21) Application number: 21179399.7
(22) Date of filing: 15.06.2021
(51) Int. Cl.: H05B 6/06

(54) **INDUCTION COOKING APPLIANCE**
INDUKTIONSKOCHVORRICHTUNG
APPAREIL DE CUISSON PAR INDUCTION

(43) Date of publication of application: 21.12.2022
(73) Proprietor: Electrolux Appliances Aktiebolag, 105 45 Stockholm (SE)
(72) Inventor: VIROLI, Alex, 47122 Forli (IT); NOSTRO, Massimo, 47100 Forli (IT); SCOTTO D'APOLLONIA, Adriano, 47122 Forli (IT); ZANGOLI, Massimo, 47100 Forli (IT); URGESE, Emanuel, 47122 Forli (IT); MENGOZZI, Alan, 47122 Forli (IT)
(74) Representative: Electrolux Group Patents

(56) References cited:
- EP-A1- 2 380 400
- EP-A1- 2 928 265
- EP-B1- 2 380 400
- US-A1- 2015 008 216

## Description

The present invention relates to an induction cooking appliance, in particular an induction cooking hob, for the thermal treatment of food products.

Induction cooking appliances such as induction cooking hobs for the thermal treatment of food products are known household devices, which are conveniently efficient if compared with traditional gas or electric cooking appliances, because on the one side, they are accurate in controlling a cooking temperature and, on the other side, allow an uniform thermal treatment of the food product.

Example induction cooking appliances are disclosed in EP-A-2928265 and EP-A-2380400. EP-A-2928265 discloses a solution in which each one of a plurality of cooking zones comprises a respective induction coil and a quasi-resonant generator. Additionally, the induction cooking appliance comprises a common power line connected to all cooking zones. The common power line is provided with the combination of a first and a second transistor. EP-A-2380400 discloses an induction cooking appliance comprising a plurality of induction coils, a plurality of relays and a plurality of inverters.

Induction cooking appliances typically comprise: a support plate provided with one or more cooking zones designed to heat loads, i.e. cooking vessels containing the food product, placed on the support plate. Each cooking zone comprises at least one induction coil for generating a time-varying electro-magnetic field inducing eddy currents in the loads.

Generally, the induction coils are selectively powered by means of a power unit. The power unit comprises a plurality of Quasi-resonant (QR) generators or a plurality of half-bridge generators (HB), each one operatively connected to at least one respective induction coil and configured to direct the required power to the respective induction coil.

While typically each QR generator comprises a respective single power switching device such as an IGBT-switch (acronym of Insulated Gate Bipolar Transistors), each half-bridge generator comprises two respective power switching devices.

It is known in the art, that while the QR generators are less complex in structure and are more economical, the half-bridge generators are more complex in structure and provide for better cooking performances and better cooking experiences to the users.

Thus, there are significant cost differences between these induction cooking appliances, which have a power unit equipped with QR-generators and the ones being equipped with half-bridge generators.

A need is felt in the sector to improve the known induction cooking appliances.

According to the present invention, there is provided an induction cooking appliance according to the independent claim.

Preferred non-limiting embodiments are claimed in the claims directly or indirectly depending on the independent claim.

In addition, according to the present invention, there is provided an induction cooking appliance, in particular an induction cooking hob, for the thermal treatment of food products comprising at least:
- a plurality of cooking zones, each having at least one induction coil for generating an electromagnetic field; and
- a power supply unit (operatively and/or electrically) coupled to the induction coils and configured to selectively control an energy input into the induction coils.

The power supply unit comprises:
- at least one quasi-resonant generator (operatively and/or electrically) coupled to only a single respective induction coil; and
- at least one half-bridge generator being (operatively and/or electrically) coupled to only a single respective induction coil.

In this manner, one obtains an induction cooking appliance being provided with both quasi-resonant and half-bridge generators. Therefore, on the one side one reduces the cost with respect to an induction cooking appliance being only provided with half-bridge generators on the other side, however, one also offers an induction cooking appliance having at least one cooking zone coming along with an increased cooking performance due to the respective half-bridge generator.

This is as the quasi-resonant generator has a lower cost than the half-bridge generator, but at the same time provides for lower cooking performances. In other words, while the quasi-resonant generator comes along with reduced costs, the half-bridge generator allows for better cooking performances.

According to some possible non-limiting embodiments, the power supply unit may comprise at least a plurality of quasi-resonant generators, each one (operatively and/or electrically) coupled to at least one respective induction coil.

In this way, it is possible to design induction cooking appliances having at least one half-bridge generator and to offer further low-cost cooking zones being controlled by means of quasi-resonant generators.

Alternatively or in addition, the power supply unit could comprise at least a plurality of half-bridge generators, each one (operatively and/or electrically) coupled to at least one respective induction coil.

In this way, it is possible to design induction cooking appliances having at least one quasi-resonant generator and to offer further high-performance cooking zones being controlled by means of respective half-bridge generators. In this way, it is possible to define an induction cooking appliance having the ideal cost-benefit ratio for varying kinds of users.

According to some possible non-limiting embodiments, each induction coil is adapted to deliver a respective maximum power. The at least one half-bridge generator is (operatively and/or electrically) coupled to the induction coil being adapted to deliver the largest respective maximum power. Additionally or alternatively, the at least one quasi-resonant generator is (operatively and/or electrically) coupled to the induction coil being adapted to deliver the lowest respective maximum power.

This is advantageous as the most power demanding induction coil is controlled by a half-bridge generator improving the user's cooking experience. It is in particular with respect to the most power demanding cooking zones, with which a consumer would more prominently experience a performance difference of the respective cooking zone when considering the control by means of a half-bridge generator and a quasi-resonant generator.

Alternatively or in addition, by associating the at least one quasi-resonant generator to the less power demanding induction coil one guarantees on the one side a lower cost and on the other side that the user does not experience significantly the difference between operation by means of a half-bridge generator and a quasi-resonant generator. Such a difference would be more prominent with higher power demanding induction coils.

Overall, one maximizes the cost-benefit relationship under consideration of the user experience.

According to some possible non-limiting embodiments, each induction coil is adapted to deliver a respective minimum power and a respective maximum power. At least one induction coil being coupled to one respective half-bridge generator presents a power difference between the respective minimum power and the respective maximum power being larger than the respective power differences between the respective minimum powers and the respective maximum powers of the other induction coils.

This allows to optimize the user experience.

According to some possible non-limiting embodiments, the induction cooking appliance may further comprise a signaling device for indicating a user the cooking zone to use in dependence of a specific cooking operation and/or cooking program to be executed.

In this manner, it can be ensured that the user is directed to the most appropriate cooking zone, in particular when needing elevated cooking performance.

Preferentially but not necessarily, the signaling device may be configured to indicate the use of a cooking zone having an induction coil being coupled to one respective half-bridge generator in dependence of the needed cooking performance.

In this manner, one guarantees the use of the cooking zone, whose induction coil is coupled to the half-bridge generator so as to guarantee the best cooking performance when such a cooking performance is required and/or at least advantageous.

According to some possible non-limiting alternatives, the signaling device is configured to indicate the use of a cooking zone having an induction coil being (operatively and/or electrically) coupled to one respective quasi-resonant generator in dependence of the needed cooking performance.

This is advantageous so as to direct the user to a cooking zone having an induction coil coupled to a quasi-resonant generator, when the required cooking performance is less demanding.

According to some possible non-limiting embodiments, each quasi-resonant generator may comprise a respective quasi-resonant inverter circuit having a (single) power switching device, in particular a (single) Insulated Gate Bipolar Transistor.

The use of the (single) power switching device guarantees reduced costs of the quasi-resonant generator.

According to some possible non-limiting embodiments, each half-bridge generator may comprise a respective half-bridge inverter circuit having a plurality of power switching devices, in particular two power switching device, even more particular two single Insulated Gate Bipolar Transistors.

In this way, the control of the induction coil is improved with respect to a quasi-resonant generator and the overall cooking performance is increased.

According to some possible non-limiting embodiments, the power supply unit may comprise one or more microcontrollers configured to control operation of the least one quasi-resonant generator and the at least one half-bridge generator.

By providing for one or more microcontrollers it is possible to precisely operate the at least one quasi-resonant generator and the at least one half-bridge generator.

Preferentially but not necessarily, the power supply unit may comprise a plurality of drivers (operatively and/or electrically) coupled to the at least one quasi-resonant generator and the at least one half-bridge generator and one or more microcontrollers, each one (operatively and/or electrically) coupled to one or more respective drivers. Each microcontroller is configured to command the drivers for controlling operation of the at least one quasi-resonant generator and the at least one half-bridge generator.

In this manner, a precise control of the operation of the half-bridge generator(s) and the quasi-resonant generator(s) is achieved.

According to some non-limiting embodiments, the power supply unit may comprise one or more power board assemblies coupled and/or coupleable to an external power supply and each carrying and/or comprising at least one quasi-resonant generator and/or at least one half-bridge generator.

Preferentially but not necessarily, each power board assembly may comprise a rectifier unit being coupled and/or coupleable to an external power supply and configured to convert an AC power signal provided by the external power supply into a rectified DC power signal. Each rectifier unit may be coupled to at least one quasi-resonant generator and/or to at least one half-bridge generator.

A non-limiting embodiment of the present invention will now be described, by way of example, with reference to the accompanying drawings, in which:
- Figure 1 is a schematic sketch of an induction cooking appliance according to the present invention, with parts removed for clarity;
- Figure 2 is a schematic sketch of a portion of the induction cooking appliance of Figure 1, with parts removed for clarity; and
- Figure 3 are possible variations of the induction cooking appliance of Figure 1, with parts removed for clarity.

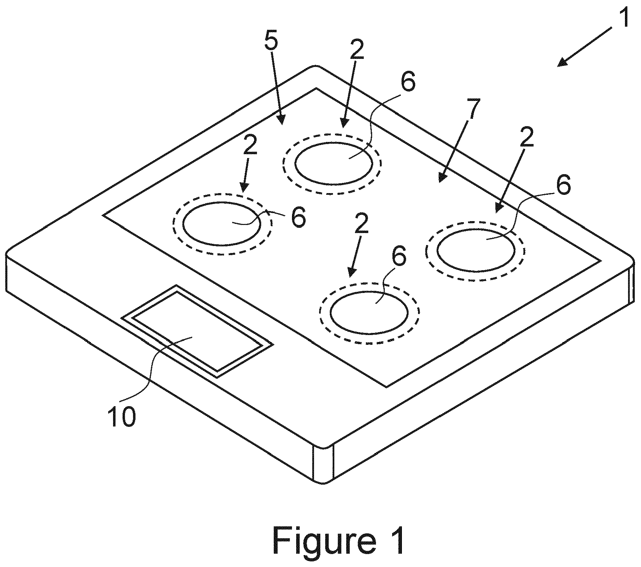

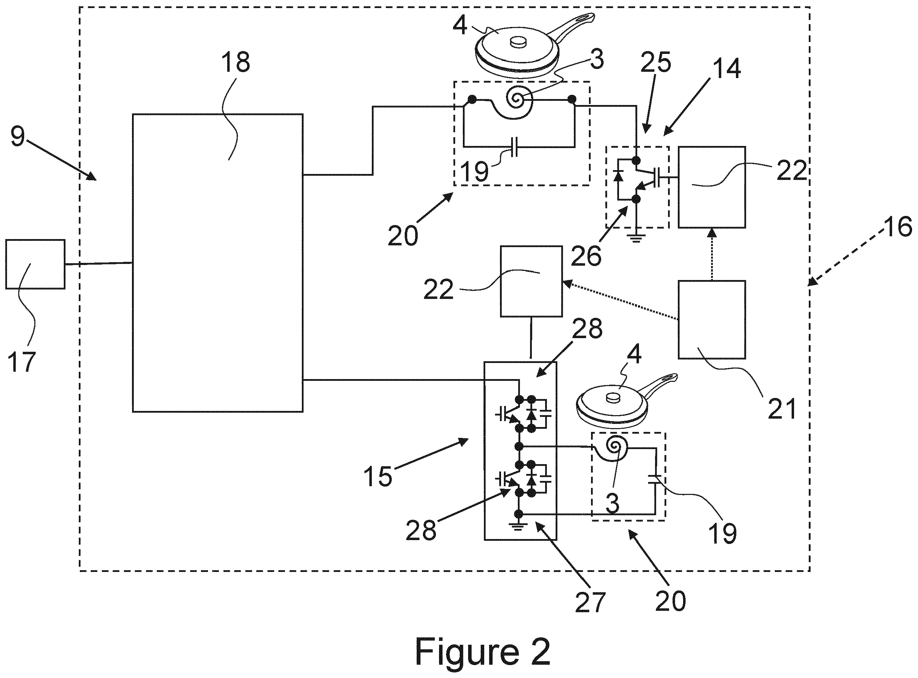

With particular reference to Figures 1 and 2, number 1 indicates as a whole an induction cooking appliance, in particular an induction cooking hob, for the thermal treatment, in particular for the heating and/or cooking, of food products.

According to some possible non-limiting embodiments, the food product to be thermally treated may be a single ingredient or a mixture of ingredients. It should also be noted that the food product to be treated may vary throughout the overall thermal treatment process; i.e. it may be possible to add or remove ingredients to the food product during the thermal treatment.

Induction cooking appliance 1 comprises a plurality of cooking zones 2, each cooking zone 2 having at least one induction coil 3 configured to generate a respective (time-varying) electromagnetic field for heating a respective load, in particular a cooking vessel 4, even more particular a cooking vessel 4 being filled with the food product.

In particular, cooking vessel 4 is adapted to be heated by means of induction heating. Even more particular, cooking vessel 4 comprise (,in particular substantially consist of) a magnetic and/or ferromagnetic material.

According to some possible non-limiting embodiments, each cooking vessel 4 can be of any type and form. A non-exhaustive list of cooking vessels 4 are pans, pots and kettles.

Furthermore, induction cooking appliance 1 may comprise a support plate 5, in particular having an horizontal orientation, comprising respective support portions 6 of cooking zones 2. In particular, support plate 5 is designed to carry cooking vessels 4.

Preferentially, each cooking zone 2 could comprise a respective support portion 6 and at least one induction coil 3 is associated to each support portion 6. In particular, each support portion 6 is configured to support the respective cooking vessel 4 to be heated by means of the respective induction coil 3.

More specifically, support plate 5 may comprise (in particular, consist of) a dielectric material, in particular a glass-ceramic material.

In particular, support plate 5 may comprise a first face 7 designed to carry cooking vessels 4 and a second face opposed to first face 6.

Moreover, induction coils 3 may be arranged such to face the second face. In particular, induction coils 3 may be arranged below support plate 5, in particular below the respective support portion 6.

Induction cooking appliance 1 also comprises a power supply unit 9 configured to selectively control an electrical energy input into induction coils 3.

Additionally, induction cooking appliance 1 may further comprise a user interface 10, in particular operatively coupled to power supply unit 9, designed to receive user input and/or providing information to the user. In particular, user interface 10 may be designed to receive user input relative to the energy input to be directed into induction coils 3. Even more particular, user interface 10 may be configured to receive a heating value/data indicative of a prefixed heating parameter, i.e. cooking temperature, selected by the user.

Advantageously, user interface 10 may be placed within a portion of support plate 5.

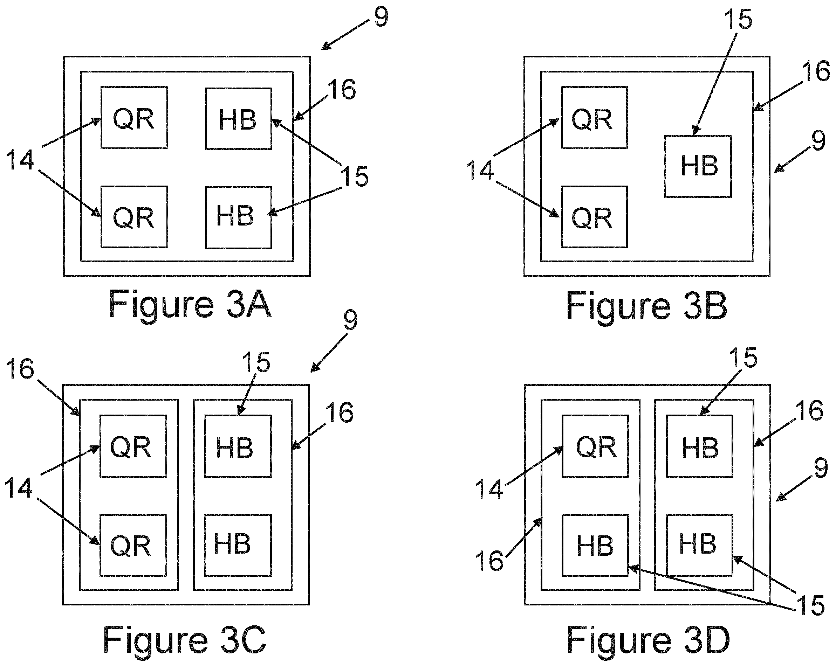

In more detail and with particular reference to Figure 2 and 3, power supply unit 9 may be configured to selectively control induction heating coils 3 by respective AC currents.

More specifically, power supply unit 9 comprises:
- one or more Quasi-resonant generators 14, each one (operatively and/or electrically) coupled to at least one respective induction coil 3; and
- one or more half-bridge generators 15, each one being (operatively and/or electrically) coupled to at least one respective induction coil 3.

Furthermore, each induction coil 3 may be adapted to deliver a power ranging between a respective maximum power and a respective minimum power. In particular, the respective maximum powers and the respective minimum powers may differ between at least some induction coils 3.

Moreover, at least one induction coil 3 may be adapted to deliver the largest maximum power; i.e. this induction coil 3 is adapted to deliver a maximum power larger than the maximum power of the others.

Additionally, at least one induction coil 3 may be adapted to deliver the lowest maximum power; i.e. this induction coil 3 is adapted to deliver a maximum power lower than the maximum power of the others.

In some cases, it is possible that some induction coils 3 present the same respective maximum power and/or the same respective minimum power.

According to some possible embodiments, at least one half-bridge generator 15 is (operatively and/or electrically) coupled to the induction coil 3 being adapted to deliver the largest respective maximum power. In other words, the induction coil 3, which can be controlled to deliver the largest maximum power is controlled by means of one respective half-bridge generator 15. In the case that e.g. two induction coils 3 are adapted to deliver the same largest maximum power, at least one of these induction coils 3 is controlled by means of one respective half-bridge generator 15.

Alternatively and/or additionally, at least one quasi-resonant generator 14 is (operatively and/or electrically) coupled to the induction coil 3 being adapted to deliver the lowest respective maximum power. In other words, the induction coil 3, which can be controlled to deliver the lowest maximum power is controlled by means of one respective quasi-resonant generator 14. In the case that e.g. two induction coils 3 are adapted to deliver the same lowest maximum power, at least one of these induction coils 3 is controlled by means of one respective quasi-resonant generator 14.

According to some possible non-limiting embodiments, at least one induction coil 3 being coupled to one respective half-bridge generator 15 presents a power difference between the respective minimum power and the respective maximum power being larger than the respective power differences between the respective minimum powers and the respective maximum powers of the other induction coils 3.

According to some possible non-limiting embodiments, induction cooking appliance 1 may further comprise a signaling device for indicating to a user which cooking zone 2 to use in dependence of a specific cooking operation and/or program to be executed.

More specifically, the signaling device may be configured to indicate the use of a cooking zone 3 having an induction coil 3 being (operatively and/or electrically) coupled to one respective half-bridge generator 15 in dependence of the needed cooking performance. E.g. in the case of a needed high cooking performance, the signaling device would indicate a cooking zone 3 being controlled by a half-bridge generator 15.

Furthermore, the signaling device may also be designed to indicate the use of a cooking zone 2 having an induction coil 3 being (operatively and/or electrically) coupled to one respective quasi-resonant generator 14 in dependence of the needed cooking performance.

According to some possible embodiments, the signaling device may comprise light elements, each one associated to one respective cooking zone 2 and the signaling device being configured to turn on the light element associated to the cooking zone 2 to be used.

Alternatively or additionally, the signaling device may comprise a display for indicating the cooking zone 2 to be used.

In the specific examples shown in Figures 3A and 3C, power supply unit 9 comprises an equal number of quasi-resonant generators 14 and half-bridge generators 15, specifically two quasi-resonant generators 14 and two half-bridge generators 15.

Alternatively and with particular reference to Figures 3B and 3D, the respective number of quasi-resonant generators 14 and the respective number of half-bridge generators 15 may be different.

Furthermore, power supply unit 9 may comprise one or more power board assemblies 16, each one coupled and/or coupleable to an external power supply 17, such as a two phase (e.g. 220 volt) alternating current (AC) power supply. For example, external power supply 17 may be provided to a (residential) property from an energy production source such as an electric utility. It is understood that in addition and/or alternatively, any other external power source 17 can be used such as for example, a one phase (110V) power supply, or a three phase power supply (380 V) and/or a DC power source.

According to some possible non-limiting embodiments, power supply unit 9 may comprise at least two power board assemblies 16, and in particular at least one power board assembly 16 may be connected to a first phase and at least one other power board assembly 16 may be connected to a second phase of external power supply 17.

In more detail and with particular reference to Figure 2, each power board assembly 16 may comprise a rectifier unit 18 coupled and/or coupleable to external power supply 17 and configured to convert an AC power signal provided by external power supply 17 into a rectified DC power signal. For example, each rectifier unit 18 may comprise a diode full-bridge for full-wave rectification or a synchronous rectifier with a plurality of switching elements for active rectification and/or any similar rectification circuit.

Furthermore, each power board assembly 16 may carry and/or comprise at least one quasi-resonant generator 14 and/or at least one half-bridge generator 15.

With particular reference to the variations shown in Figures 3A and 3B, power supply unit 9 may comprise a single power board assembly 16. According to such variations, the single power board assembly 16 comprises at least one quasi-resonant generator 14 and at least one half-bridge generator 15.

Additionally, the single power board assembly 16 may comprise one or more further quasi-resonant generators 14 and/or one or more further half-bridge generators 15. In the specific variation shown in Figure 3A, the single power assembly 16 comprises two quasi-resonant generators 14 and two half-bridge generators 15. In the specific variation of Figure 3B, power board assembly 16 comprises two quasi-resonant generators 14 and one half-bridge generator 15.

With particular reference to the variations shown in Figures 3C and 3D, power supply unit 9 may comprise two power board assemblies 16. Each power board assembly 16 may comprise either one or more quasi-resonant generators 14 or one or more half-bridge generators 15. In the variation shown in Figure 3C, one power board assembly 16 comprises two quasi-resonant generators 14 and the other power board assembly 16 comprises two half-bridge generators 15. In the variation shown in Figure 3D, one power board assembly 16 comprises one quasi-resonant generator 14 and one half-bridge generator 15 and the other power board assembly 16 comprises two half-bridge generators 15.

It is clear that other variations can originate from the general concept that power supply unit 9 comprises at least one half-bridge generator 15 and at least one quasi-resonant generator 14. In other words, each power board assembly 16 can be equipped with one or more quasi-resonant generators 14 and/or half-bridge generators 15 such that power supply unit 9 comprises at least one half-bridge generator 15 and at least one quasi-resonant generator 14.

With particular reference to Figure 2, power supply unit 9 may comprise a plurality of resonant capacitors 19, each one associated to one respective induction coil 3 so as to form in combination a respective resonator tank 20.

With particular reference to Figure 2, each rectifier unit 18 is electrically connected and/or connectable to one or more quasi-resonant generators 14 and/or one or more half-bridge generators 15 and/or induction coils 3 and/or resonant capacitors 19.

Moreover, power supply unit 9 may comprise one or more microcontrollers 21 configured to selectively control operation of quasi-resonant generators 14 and half-bridge generators 15.

In particular, each power board assembly 16 comprises one respective microcontroller 21, the respective microcontroller 21 being configured to selectively control the respective quasi-resonant generators 14 and/or the respective half-bridge generators 15. In other words, the respective quasi-resonant generators 14 and/or the respective half-bridge generators 15 of each power board assembly 16 are selectively controlled by means of the respective microcontroller 21.

Additionally, power supply unit 9 comprises, in particular power board assemblies 16 comprise, a plurality of drivers 22, each one (operatively and/or electrically) coupled to a respective quasi-resonant generator 14 or a respective half-bridge generator 15 and to one respective microcontroller 21.

Moreover, each microcontroller 21 may be configured to selectively command the respective drivers 22 for selectively controlling the respective quasi-resonant generator 14 or the respective half-bridge generator 15.

It should be noted that the drivers 22 associated to quasi-resonant generators 14 may be (with regard to their construction) different to the drivers 22 associated to half-bridge generator 15. In particular, the drivers 22 associated to quasi-resonant generators 14 may be less complex (and consequently less expensive) than the drivers 22 associated to half-bridge generators 15.

In further detail and with particular reference to Figure 2, each quasi-resonant generator 14 comprises a respective quasi-resonant inverter circuit 25 having a power switching device 26, in particular an Insulated Gate Bipolar Transistor.

According to the non-limiting embodiment shown, each quasi-resonant generator 14 could comprise a single power switching device 26, in particular a single Insulated Gate Bipolar Transistor.

Alternatively, each quasi-resonant generator 14 could comprise two parallelly arranged power switching devices 26, in particular two parallelly arranged Insulated Gate Bipolar Transistors.

More specifically, each power switching device 26 may be connected to the respective driver 22 for controlling the respective power switching device 26.

In further detail and with particular reference to Figure 2, each half-bridge generator 15 may comprise a respective half-bridge inverter circuit 27 having a plurality of power switching devices 28, in particular two power switching device 28, even more particular two single Insulated Gate Bipolar Transistors.

More specifically, each plurality of power switching devices 28 may be connected to the respective driver 22 for controlling operation of the respective plurality of power switching devices 28.

In use, a user places one or more cooking vessels 4 on respective cooking zones 2 and power supply unit 9 controls the energy supply to induction coils 3 for generating the heat within the respective cooking vessel 4.

Clearly, changes may be made to induction cooking appliance 1 without, however, departing from the scope of the present invention.

### List of Reference Signs

- 1: Induction cooking appliance
- 2: Cooking zone
- 3: Induction coil
- 5: Support plate
- 6: Support portion
- 7: First face
- 9: Power supply unit
- 10: User interface
- 14: Quasi-resonant generator
- 15: Half-bridge generator
- 16: Power board assembly
- 17: External power supply
- 18: Rectifier unit
- 19: Capacitors
- 20: Resonator tank
- 21: Microcontroller
- 22: Drivers
- 25: Quasi-resonant inverter circuit
- 26: Single power switching device
- 27: Half-bridge inverter circuit
- 28: Power switching device

## Claims

1. Induction cooking appliance (1), in particular an induction cooking hob, for the thermal treatment of food products comprising at least:
- a plurality of cooking zones (2) each having at least one induction coil (3) for generating an electromagnetic field; and
- a power supply unit (9) coupled to the induction coils (3) and configured to selectively control an energy input into the induction coils (3);
wherein the power supply unit (9) comprises:
- at least one quasi-resonant generator (14) coupled to only a single respective induction coil (3); and
- at least one half-bridge generator (15) being coupled to only a single respective induction coil (3).

2. Induction cooking appliance according to claim 1, wherein the power supply unit (9) comprises at least a plurality of quasi-resonant generators (14), each one coupled to at least one respective induction coil (3).

3. Induction cooking appliance according to claim 1 or 2, wherein the power supply unit (9) comprises at least a plurality of half-bridge generators (15), each one coupled to at least one respective induction coil (3).

4. Induction cooking appliance according to any one of claims 1 to 3, wherein each induction coil (3) is adapted to deliver a respective maximum power;
wherein the at least one half-bridge generator (15) is coupled to the induction coil (3) being adapted to deliver the largest respective maximum power; and/or
wherein the at least one quasi-resonant generator (14) is coupled to the induction coil (3) being adapted to deliver the lowest respective maximum power.

5. Induction cooking appliance according to any one of the preceding claims, wherein each induction coil (3) is adapted to deliver a respective minimum power and a respective maximum power;
wherein at least one induction coil (3) being coupled to one respective half-bridge generator (15) presents a power difference between the respective minimum power and the respective maximum power being larger than the respective power differences between the respective minimum powers and the respective maximum powers of the other induction coils (3).

6. Induction cooking appliance according to any one of the preceding claims, furthermore comprising a signaling device for indicating to a user the cooking zone (2) to use in dependence of a specific cooking operation and/or cooking program to be executed.

7. Induction cooking appliance according to claim 6, wherein the signaling device is configured to indicate the use of a cooking zone (2) having an induction coil (3) being coupled to one respective half-bridge generator (15) in dependence of the needed cooking performance.

8. Induction cooking appliance according to claim 6 or 7, wherein the signaling device is configured to indicate the use of a cooking zone (2) having an induction coil (3) being coupled to one respective quasi-resonant generator (14) in dependence of the needed cooking performance.

9. Induction cooking appliance according to any one of the preceding claims, wherein each quasi-resonant generator (14) comprises a respective quasi-resonant inverter circuit (25) having a power switching device (26), in particular an Insulated Gate Bipolar Transistor, even more particular a single Insulated Gate Bipolar Transistor.

10. Induction cooking appliance according to any one of the preceding claims, wherein each half-bridge generator (15) comprises a respective half-bridge inverter circuit (27) having a plurality of power switching devices (28), in particular two power switching devices (28), even more particular two Insulated Gate Bipolar Transistors.

11. Induction cooking appliance according to any one of the preceding claims, wherein the power supply unit (9) comprises one or more microcontrollers (21) configured to control operation of the least one quasi-resonant generator (14) and the at least one half-bridge generator (15).

12. Induction cooking appliance according to any one of the preceding claims, wherein the power supply unit (9) comprises a plurality of drivers (22) coupled to the at least one quasi-resonant generator (14) and the at least one half-bridge generator (15) and one or more microcontrollers (21), each one coupled to one or more respective drivers (22);
wherein each microcontroller (21) is configured to command the drivers (21) for controlling operation of the at least one quasi-resonant generator (14) and the at least one half-bridge generator (15).

13. Induction cooking appliance according to any one of the preceding claims, wherein the power supply unit (9) comprises one or more power board assemblies (16) coupled and/or coupleable to an external power supply (17) and each carrying and/or comprising at least one quasi-resonant generator (14) and/or at least one half-bridge generator (15).

14. Induction cooking appliance according to claim 13, wherein each power board assembly (16) comprises a rectifier unit (18) being coupled and/or coupleable to the external power supply (17) and configured to convert an AC power signal provided by the external power supply (17) into a rectified DC power signal;
wherein each rectifier unit (18) is coupled to at least one quasi-resonant generator (14) and/or to at least half-bridge generator (15).

## Patentansprüche

1. Induktionskochvorrichtung (1), insbesondere Induktionskochfeld, zur thermischen Behandlung von Lebensmittelprodukten, umfassend mindestens:
- eine Mehrzahl von Kochzonen (2), die jeweils mindestens eine Induktionsspule (3) zum Erzeugen eines elektromagnetischen Feldes aufweisen; und
- eine Leistungsversorgungseinheit (9), die mit den Induktionsspulen (3) gekoppelt ist und dazu ausgelegt ist, eine Energieeingabe in die Induktionsspulen (3) selektiv zu steuern;
wobei die Leistungsversorgungseinheit (9) Folgendes umfasst:
- mindestens einen Quasiresonanzgenerator (14), der mit nur einer einzelnen jeweiligen Induktionsspule (3) gekoppelt ist; und
- mindestens einen Halbbrückengenerator (15), der mit nur einer einzigen jeweiligen Induktionsspule (3) gekoppelt ist.

2. Induktionskochvorrichtung nach Anspruch 1, wobei die Leistungsversorgungseinheit (9) mindestens eine Mehrzahl von Quasiresonanzgeneratoren (14) umfasst, von denen jeder mit mindestens einer jeweiligen Induktionsspule (3) gekoppelt ist.

3. Induktionskochvorrichtung nach Anspruch 1 oder 2, wobei die Leistungsversorgungseinheit (9) mindestens eine Mehrzahl von Halbbrückengeneratoren (15) umfasst, von denen jeder mit mindestens einer jeweiligen Induktionsspule (3) gekoppelt ist.

4. Induktionskochvorrichtung nach einem der Ansprüche 1 bis 3, wobei jede Induktionsspule (3) dazu ausgelegt ist, eine jeweilige maximale Leistung zu liefern;
wobei der mindestens eine Halbbrückengenerator (15) mit der Induktionsspule (3) gekoppelt ist, die dazu ausgelegt ist, die größte jeweilige maximale Leistung zu liefern; und/oder
wobei der mindestens eine Quasiresonanzgenerator (14) mit der Induktionsspule (3) gekoppelt ist, die dazu ausgelegt ist, die niedrigste jeweilige maximale Leistung zu liefern.

5. Induktionskochvorrichtung nach einem der vorhergehenden Ansprüche, wobei jede Induktionsspule (3) dazu ausgelegt ist, eine jeweilige minimale Leistung und eine jeweilige maximale Leistung zu liefern;
wobei mindestens eine Induktionsspule (3), die mit einem jeweiligen Halbbrückengenerator (15) gekoppelt ist, eine Leistungsdifferenz zwischen der jeweiligen minimalen Leistung und der jeweiligen maximalen Leistung aufweist, die größer als die jeweiligen Leistungsdifferenzen zwischen den jeweiligen minimalen Leistungen und den jeweiligen maximalen Leistungen der anderen Induktionsspulen (3) ist.

6. Induktionskochvorrichtung nach einem der vorhergehenden Ansprüche, ferner umfassend eine Signalvorrichtung zum Anzeigen der zu verwendenden Kochzone (2) für einen Benutzer in Abhängigkeit von einem bestimmten auszuführenden Kochvorgang und/oder Kochprogramm.

7. Induktionskochvorrichtung nach Anspruch 6, wobei die Signalvorrichtung dazu ausgelegt ist, die Verwendung einer Kochzone (2) mit einer Induktionsspule (3), die mit einem jeweiligen Halbbrückengenerator (15) gekoppelt ist, in Abhängigkeit von der benötigten Kochleistung anzugeben.

8. Induktionskochvorrichtung nach Anspruch 6 oder 7, wobei die Signalvorrichtung dazu ausgelegt ist, die Verwendung einer Kochzone (2) mit einer Induktionsspule (3), die mit einem jeweiligen Quasiresonanzgenerator (14) gekoppelt ist, in Abhängigkeit von der benötigten Kochleistung anzugeben.

9. Induktionskochvorrichtung nach einem der vorhergehenden Ansprüche, wobei jeder Quasiresonanzgenerator (14) eine jeweilige Quasiresonanzwechselrichterschaltung (25) mit einer Leistungsschaltvorrichtung (26), insbesondere einem Bipolartransistor mit isoliertem Gate, noch spezieller einem einzigen Bipolartransistor mit isoliertem Gate, umfasst.

10. Induktionskochvorrichtung nach einem der vorhergehenden Ansprüche, wobei jeder Halbbrückengenerator (15) eine jeweilige Halbbrückenwechselrichterschaltung (27) umfasst, die eine Mehrzahl von Leistungsschaltvorrichtungen (28), insbesondere zwei Leistungsschaltvorrichtungen (28), noch spezieller zwei Bipolartransistoren mit isoliertem Gate, aufweist.

11. Induktionskochvorrichtung nach einem der vorhergehenden Ansprüche, wobei die Leistungsversorgungseinheit (9) einen oder mehrere Mikrocontroller (21) umfasst, die dazu ausgelegt sind, den Betrieb des mindestens einen Quasiresonanzgenerators (14) und des mindestens einen Halbbrückengenerators (15) zu steuern.

12. Induktionskochvorrichtung nach einem der vorhergehenden Ansprüche, wobei die Leistungsversorgungseinheit (9) eine Mehrzahl von Treibern (22) umfasst, die mit dem mindestens einen Quasiresonanzgenerator (14) und dem mindestens einen Halbbrückengenerator (15) gekoppelt sind, und einen oder mehrere Mikrocontroller (21), von denen jeder mit einem oder mehreren jeweiligen Treibern (22) gekoppelt ist; wobei jeder Mikrocontroller (21) dazu ausgelegt ist, die Treiber (21) zum Steuern des Betriebs des mindestens einen Quasiresonanzgenerators (14) und des mindestens einen Halbbrückengenerators (15) anzusteuern.

13. Induktionskochvorrichtung nach einem der vorhergehenden Ansprüche, wobei die Leistungsversorgungseinheit (9) eine oder mehrere Leistungsplatinenanordnungen (16) umfasst, die mit einer externen Leistungsversorgung (17) gekoppelt und/oder koppelbar sind und jeweils mindestens einen Quasiresonanzgenerator (14) und/oder mindestens einen Halbbrückengenerator (15) tragen und/oder umfassen.

14. Induktionskochvorrichtung nach Anspruch 13, wobei jede Leistungsplatinenanordnung (16) eine Gleichrichtereinheit (18) umfasst, die mit der externen Leistungsversorgung (17) gekoppelt und/oder koppelbar ist und dazu ausgelegt ist, ein durch die externe Leistungsversorgung (17) bereitgestelltes Wechselstromleistungssignal in ein gleichgerichtetes Gleichstromleistungssignal umzuwandeln;
wobei jede Gleichrichtereinheit (18) mit mindestens einem Quasiresonanzgenerator (14) und/oder mit mindestens einem Halbbrückengenerator (15) gekoppelt ist.

## Revendications

1. Appareil de cuisson par induction (1), en particulier une table de cuisson par induction, pour le traitement thermique de produits alimentaires comprenant au moins :
- une pluralité de zones de cuisson (2) ayant chacune au moins une bobine d'induction (3) pour générer un champ électromagnétique ; et
- une unité d'alimentation électrique (9) couplée aux bobines d'induction (3) et configurée pour contrôler sélectivement une énergie entrée dans les bobines d'induction (3) ;
dans lequel l'unité d'alimentation électrique (9) comprend :
- au moins un générateur quasi résonant (14) couplé à seulement une bobine d'induction (3) respective unique ; et
- au moins un générateur en demi-pont (15) étant couplé à seulement une bobine d'induction (3) respective unique.

2. Appareil de cuisson par induction selon la revendication 1, dans lequel l'unité d'alimentation électrique (9) comprend au moins une pluralité de générateurs quasi résonants (14), chacun couplé à au moins une bobine d'induction (3) respective.

3. Appareil de cuisson par induction selon la revendication 1 ou la revendication 2, dans lequel l'unité d'alimentation électrique (9) comprend au moins une pluralité de générateurs en demi-pont (15), chacun couplé à au moins une bobine d'induction (3) respective.

4. Appareil de cuisson par induction selon l'une quelconque des revendications 1 à 3, dans lequel chaque bobine d'induction (3) est conçue pour fournir en sortie une puissance maximale respective ;
dans lequel l'au moins un générateur en demi-pont (15) est couplé à la bobine d'induction (3) étant conçue pour fournir en sortie la puissance maximale respective la plus grande ; et/ou
dans lequel l'au moins un générateur quasi résonant (14) est couplé à la bobine d'induction (3) étant conçue pour fournir en sortie la puissance maximale respective la plus faible.

5. Appareil de cuisson par induction selon l'une quelconque des revendications précédentes, dans lequel chaque bobine d'induction (3) est conçue pour fournir en sortie une puissance minimale respective et une puissance maximale respective ;
dans lequel au moins une bobine d'induction (3) étant couplée à un générateur en demi-pont (15) respectif présente une différence de puissance entre la puissance minimale respective et la puissance maximale respective étant plus grande que les différences de puissance respectives entre les puissances minimales respectives et les puissances maximales respectives des autres bobines d'induction (3).

6. Appareil de cuisson par induction selon l'une quelconque des revendications précédentes, comprenant en outre un dispositif de signalisation pour indiquer à un utilisateur la zone de cuisson (2) à utiliser en fonction d'une opération de cuisson spécifique et/ou d'un programme de cuisson à exécuter.

7. Appareil de cuisson par induction selon la revendication 6, dans lequel le dispositif de signalisation est configuré pour indiquer l'utilisation d'une zone de cuisson (2) ayant une bobine d'induction (3) étant couplée à un générateur en demi-pont (15) respectif en fonction de la performance de cuisson requise.

8. Appareil de cuisson par induction selon la revendication 6 ou la revendication 7, dans lequel le dispositif de signalisation est configuré pour indiquer l'utilisation d'une zone de cuisson (2) ayant une bobine d'induction (3) étant couplée à un générateur quasi résonant (14) respectif en fonction de la performance de cuisson requise.

9. Appareil de cuisson par induction selon l'une quelconque des revendications précédentes, dans lequel chaque générateur quasi résonant (14) comprend un circuit inverseur quasi résonant (25) respectif ayant un dispositif de commutation de puissance (26), en particulier un transistor bipolaire à porte isolée, encore plus en particulier un transistor bipolaire à porte isolée unique.

10. Appareil de cuisson par induction selon l'une quelconque des revendications précédentes, dans lequel chaque générateur en demi-pont (15) comprend un circuit inverseur en demi-pont (27) respectif ayant une pluralité de dispositifs de commutation de puissance (28), en particulier deux dispositifs de commutation de puissance (28), encore plus en particulier deux transistors bipolaires à porte isolée.

11. Appareil de cuisson par induction selon l'une quelconque des revendications précédentes, dans lequel l'unité d'alimentation électrique (9) comprend un ou plusieurs microcontrôleurs (21) configurés pour contrôler le fonctionnement de l'au moins un générateur quasi résonant (14) et l'au moins un générateur en demi-pont (15).

12. Appareil de cuisson par induction selon l'une quelconque des revendications précédentes, dans lequel l'unité d'alimentation électrique (9) comprend une pluralité de pilotes (22) couplés à l'au moins un générateur quasi résonant (14) et l'au moins un générateur en demi-pont (15) et un ou plusieurs microcontrôleurs (21), chacun couplé à un ou plusieurs pilotes (22) respectifs ;
dans lequel chaque microcontrôleur (21) est configuré pour commander les pilotes (21) pour contrôler le fonctionnement de l'au moins un générateur quasi résonant (14) et l'au moins un générateur en demi-pont (15).

13. Appareil de cuisson par induction selon l'une quelconque des revendications précédentes, dans lequel l'unité d'alimentation électrique (9) comprend un ou plusieurs ensembles cartes d'alimentation (16) couplés et/ou pouvant être couplés à une alimentation électrique externe (17) et portant et/ou comprenant chacun au moins un générateur quasi résonant (14) et/ou au moins un générateur en demi-pont (15).

14. Appareil de cuisson par induction selon la revendication 13, dans lequel chaque ensemble carte d'alimentation (16) comprend une unité redresseuse (18) étant couplée et/ou pouvant être couplée à l'alimentation électrique externe (17) et configurée pour convertir un signal de puissance CA fourni par l'alimentation électrique externe (17) en un signal de puissance CC redressé ;
dans lequel chaque unité redresseuse (18) est couplée à au moins un générateur quasi résonant (14) et/ou à au moins un générateur en demi-pont (15).
